# EUROPEAN PATENT SPECIFICATION

(11) **EP 3 059 575 B1**
(45) Date of publication and mention of the grant of the patent: **25.11.2020**
(21) Application number: 15155914.3
(22) Date of filing: 20.02.2015
(51) Int. Cl.: G01N 21/55, G01M 11/02, G01N 21/41

(54) **Method for determining the quality of a surface of an ophthalmic lens**
Verfahren zur Bestimmung der Qualität einer Oberfläche einer ophthalmischen Linse
Procédé permettant de déterminer la qualité de surface d'une lentille ophtalmique

(43) Date of publication of application: 24.08.2016
(73) Proprietor: Alcon Inc., 1701 Fribourg (CH)
(72) Inventor: Tonn, Thomas, 63739 Aschaffenburg (DE); Lässig, Günter, 63785 Obernburg (DE)
(74) Representative: Bohest AG

(56) References cited:
- EP-A1- 0 232 986
- GB-A- 2 069 172
- US-A1- 2012 133 957
- US-A1- 2014 092 395
- US-A1- 2014 368 812
- JOSÉ M. GONZÁLEZ-MÉIJOME ET AL: "Equivalences between refractive index and equilibrium water content of conventional and silicone hydrogel soft contact lenses from automated and manual refractometry", JOURNAL OF BIOMEDICAL MATERIALS RESEARCH PART B: APPLIED BIOMATERIALS, vol. 80B, no. 1, 1 January 2007 (2007-01-01), pages 184-191, XP055193400, ISSN: 1552-4973, DOI: 10.1002/jbm.b.30583

## Description

### FIELD OF THE INVENTION

The invention relates to a method for determining the quality of a surface of an ophthalmic lens, in particular of a contact lens.

### BACKGROUND

In order to improve the tolerance and the comfort of ophthalmic lenses, in particular contact lenses, considerable effort is undertaken. Aspects of interest in this respect are the wettability of an ophthalmic lens with lacrimal fluid, the resistance to proteinaceous deposits, biocompatibility, etc. Generally, for the manufacture of ophthalmic lenses specific lens materials are used which are highly hygroscopic and have a high wettability. Ophthalmic lenses also may be plasma treated, e.g. by exposing them to an oxygen plasma, in order to modify the lens surfaces and to improve the wettability thereof and to increase the resistance of the surface against contaminations. In another approach ophthalmic lenses may be provided with a coating in order to obtain the desired lens properties.

Examples of methods for investigation of the properties of a contact lens are given in patent documents GB 2 069 172, US 2014/0092395 or US 2014/0368812.

Patent document GB 2 069 172 describes an optical system for measuring parameters of a soft lens supported on a pedestal and submerged in a liquid. Light from a laser 26 is directed by mirrors toward the contact lens 27, which is to be tested. Light received along a path 32 is imaged by a telescope unit 34 and deflected by mirrors toward a plane of aperture A. When the spacing between the center line 29 and path 28 is the same as the spacing between center line 29 and path 32, the light will pass through aperture A to a detector 35. An objective 5 is selectively movable along the instrument center line 29 in order that the intersection of converging light path 33 with center line 29 may be selectively located at an anterior surface 36, a posterior surface 37 and a top surface 38 of the contact lens 27. Three signal peaks will be noted as objective 5 moves towards lens 27. The distance objective 5 moves between the first two peaks is the apparent thickness T of the lens and the distance it moves between the second and third peaks is the apparent sagittal height s'. Patent document US 2014/0092395 describes a method for automated in line determination of the refractive power of an ophthalmic lens, for example soft contact lens. The refractive power of an ophthalmic lens 5 immersed in liquid contained in an inspection cuvette can be determined using a wavefront sensor 6, preferably a Shack-Hartmann-Sensor 60. Optionally the center thickness of the ophthalmic lens may be determined through an interferometric measurement.

Patent document US 2014/0368812 describes a method and apparatus for determining properties of an object including thickness or refractive power. The object 120 comprises a contact lens 121 which is immersed within a saline solution 123 contained within an object holder in the form of a cuvette 122. The object 120 is at least partially transparent in that radiation 110 is able to pass through the object 120. However, other apparatuses operating in a reflective mode may be envisaged. A microscope 130 is used to produce a magnified image.

Providing an ophthalmic lens substrate, in particular a contact lens substrate, of one material with a coating of a different material has been proposed as a strategy for making contact lenses for a variety of reasons. The coating may offer properties that are different from those of the lens substrate and which are particularly desirable at a lens surface apart from the properties of the lens substrate material itself. Properties such as wettability, resistance to proteinaceous deposits, biocompatibility, UV shielding and other desirable lens characteristics and properties may conceivably be addressed by a specific coating. However, there may appear problems associated with coating lens substrates which include repeatability of both polymer type and coating thickness. Therefore, coated ophthalmic lenses, in particular contact lenses, are routinely inspected for the quality of the coating. Such inspection is also carried out e.g. when new coating materials are tested or in order to determine which coating thickness is necessary to achieve the desired properties, in particular with regard to wettability, resistance to proteinaceous deposits, aging, mechanical endurance etc. For example rubbing tests are performed manually, the results of which are very subjective and inaccurate. Such tribological methods applied by an experienced test person can only provide some qualitative results, which may somewhat be indirectly representative of the material properties of the coating and which may be highly subjective.

The wettability or hydrophilic properties of an ophthalmic lens with or without coating may e.g. be determined by measuring the contact angle in between the inspected surface of the lens substrate and a wetting liquid, usually water or a lacrimal fluid. A small measured contact angle indicates a good wettability and a good resistance to proteinaceous deposits. The measurement of the contact angle, however, is a rather cumbersome and inaccurate method for a determination of the quality of a surface of an ophthalmic lens. In particular with coated lenses the method is rather insensitive to changes of the coating, such as e.g. coating time, coating thickness, hydrophilicity, etc.. Therefore, there exists a strong desire for a more convenient measurement method, which provides more accuracy and has a broader field of application with regard to the determination and classification of the quality of a surface of an ophthalmic lens, which may be provided with a coating.

### SUMMARY OF THE INVENTION

In the following, whenever features are combined with the term "or", the term "or" is to be understood to also include "and" unless it is evident from the specification that the term "or" must be understood as being exclusive. For example, the term "determining a transition from the fluid to the front surface or the back surface of the ophthalmic lens" is to be understood to include cases in which only the transition to the front surface is determined, furthermore to include cases in which only the transition to the back surface is determined, as well as cases in which both the transition to the front surface and to the back surface is determined.

The present invention suggests a method for quantifying the water content of a surface of a contact lens, as defined in claim 1.

Further embodiments of the invention are defined in dependent claims 2-10.

Hydrophilic surfaces of ophthalmic lenses absorb water or lacrimal fluid or tear-like fluid. In order to achieve a desired hydrophilicity specific lens materials may be selected, the ophthalmic lens may be exposed to a specific plasma-treatment, e.g. oxygen plasma, or the lens substrate may be coated with a hydrophilic coating, e.g. a hydrophilic polymeric coating. For example, when soft contact lenses are worn on the eye, they do not rest directly on the cornea of the eye, but rather they rest on a thin film of lacrimal fluid between the cornea and the back surface of the soft contact lens. The better the wettability of the contact lens with regard to lacrimal fluid, the better the wearing comfort of the lens will be experienced by the wearer. Wettability of contact lens, such as e.g. a coated soft contact lens, is therefore directly linked to the contact lens' ability to absorb lacrimal fluid which to a large extent consists of water and in addition contains various proteins, enzymes and sodium chloride. By immersing a contact lens, or more generally an ophthalmic lens, in water or lacrimal fluid or tear-like fluid, the front surface and the back surface of the ophthalmic lens may absorb the fluid in accordance with their specific hydrophilic and absorption properties, which e.g. may be improved by exposure of the ophthalmic lens to a plasma-treatment or by providing the lens substrate with a hydrophilic coating.

Using an optical inspection system a transition from the fluid to the front surface or to the back surface of the ophthalmic lens may then be detected. Depending on the degree of absorption of the fluid within the ophthalmic lens at the respective front surface or back surface, the detection may require more or less effort. A reflectivity value of an inspected segment of the front surface or of the back surface of the ophthalmic lens will strongly depend on the hydrophilicity of the inspected surface of the ophthalmic lens, which e.g. may be provided with a hydrophilic coating. The more fluid is absorbed within the ophthalmic lens at the front or back surface the more the refractive index of the inspected segment of the front surface or of the back surface of the ophthalmic lens will resemble the refractive index of the surrounding fluid, and the smaller the measured reflectivity values of the immersed ophthalmic lens will be. Thus, in order for the optical inspection system to identify the transition from the fluid to the front surface or to the back surface of the lens, a maximum reflectivity value is determined along an optical axis from the optical inspection system to the inspected surface of the immersed ophthalmic lens. This maximum reflectivity value corresponds to a maximum difference of the refractive indices of the fluid and of the ophthalmic lens, respectively. The location along the optical axis of an inspected segment which exhibits the maximum reflectivity value along the optical axis corresponds to the transition from the fluid to the front surface or the back surface of the ophthalmic lens. By immersing the ophthalmic lens in water or lacrimal fluid of tear-like fluid the sensitivity of the optical inspection system is increased and allows the detection of even only very small variations of the fluid content of the inspected surface. Thus, the measured reflectivity value is a measure for the fluid content of the inspected surface of the ophthalmic lens. The measured reflectivity value is stored, for example, for visualization on an output device, such as for example an electronic monitor. The measured reflectivity value of the inspected segment of the front surface or the back surface is compared with a reference reflectivity value of a corresponding segment of a front surface or a back surface of a reference ophthalmic lens having known material properties (or, alternatively, with any other suitable known reference reflectivity value). From the comparison of the measured reflectivity value and the reference reflectivity value an immediate qualitative rating of the inspected surface of an ophthalmic lens can be carried out.

The measurement of the reflectivity value of at least one segment of the front surface or the back surface of the immersed ophthalmic lens may be used e.g. for qualitatively determining the wettability of a contact lens substrate, or the effectivity of a plasma treatment of the surfaces of an ophthalmic lens. The measurement may e.g. be used for comparing plasma treatments of ophthalmic lenses with different plasma parameters. In case of an ophthalmic lens which is provided with a hydrophilic coating the measurement of the reflectivity value of at least one segment of the front surface or the back surface of the immersed lens may be used for qualitatively determining the efficiency of a coating process. It may also be used to qualitatively evaluate the durability of the coating with regard to mechanical stress, or to qualitatively characterize a coated ophthalmic lens with regard to long term stability and ageing of the coating. Tribological methods involving a subjective assessment by a more or less experienced test person may be avoided. The test method according to the invention yields objective measurements. It is reproducible, and may be carried out in a non-destructive manner regarding the inspected ophthalmic lens, which may, e.g. be provided with a coating.

The use of a confocal laser scanning microscope enables the evaluation of small volumes having an extension in the direction of an optical axis of the laser microscope in the range of 8 µm to 13 µm, preferably of about 10 µm and defining a planar segment which extends perpendicular to the optical axis and has a lateral extension of 12 µm to 17 µm, preferably of about 15 µm, squared. Thus, locating the transition from the fluid to the inspected front surface or back surface of the immersed ophthalmic lens is facilitated. The confocal laser scanning microscope may be employed for a discrete segment-wise measurement of the reflectivity value or for an automated scan of the entire front surface or back surface of the immersed ophthalmic lens, which may be provided with a coating.

For a fast scan and for a characterization of a greater number of ophthalmic lenses it may be sufficient if only a central segment in a central portion of the ophthalmic lens is inspected.

In order for the front surface and the back surface of the immersed ophthalmic lens to be inspected, a lens support may be used which allows free 'optical access' to the front surface and the back surface, respectively, of the ophthalmic lens. Alternatively, the measurement of the reflectivity value of at least one segment on the back surface of an ophthalmic lens may be carried out simply by inverting the ophthalmic lens prior to arranging it on the lens support.

Measurements in the selected peripheral regions in particular cover the optical zone of the coated ophthalmic lens. By measuring the reflectivity values of the front surface or the back surface also in peripheral regions thereof, it may be ensured that the inspected lens surface is homogeneous. With an increasing number of inspected segments of the front surface or the surface of the ophthalmic lens a more detailed characterization of the ophthalmic lens may be achieved. In case of an ophthalmic lens which is provided with a coated front surface and a coated back surface the presence of the coating and its homogeneity may thus be ensured. Such multi-segment measurements may also be useful in particular for a determination of the resistance to mechanical stress of the coating, for longtime endurance and ageing evaluations.

In a so-called full scan, a plurality of segments arranged over the entire front surface or back surface of the coated ophthalmic lens may be inspected. While such a full scan of an ophthalmic lens, which may be provided with a coating, may require a considerable time, such a full scan may be of particular advantage in the handling of customer complaints, in order to clearly identify any defects which may be present on the front or back surfaces of the ophthalmic lens. While such an objected to ophthalmic lens may be inspected and characterized with scrutiny the fully scanned ophthalmic lens is not impaired by the analysis.

In case that more than one reflectivity value of a front surface or of a back surface of an ophthalmic lens, which e.g. may be coated, is measured, a grey scale picture of the ophthalmic lens may be displayed. Likewise, the corresponding reference reflectivity values of the reference ophthalmic lens may be displayed. Both, the measured reflectivity values and the reference reflectivity values may be displayed in a two dimensional mapping in grey scale, or they may be coded, for example, in integer values between 0 and 255, depending on the selected magnitude of the grey scale.

The measurements of the reflectivity value of a segment of the front surface or on the back surface of an ophthalmic lens may be carried out at varying sensitivities of the sensor of the optical inspection system, e.g. the confocal laser scanning microscope. Varying the sensitivity of the sensor corresponds to varying the amplification of a photo-multiplier tube and simulates a variation of the intensity of irradiation of the ophthalmic lens by the irradiating laser. By this approach adverse influences, for example influences caused by stray light, can be eliminated. For example, it can be found that over a wide range of (simulated) intensities of the irradiating laser the measured reflectivity values are linearly proportional to the selected (simulated) intensities of the irradiating laser. Thus, e.g. for a characterization of a novel coating material, it may be ascertained that the actual measurements of the reflectivity values are performed at a (simulated) laser intensity within the linear portion of the correlation. It should be noted, that the more fluid is absorbed within the coated surface of the ophthalmic lens the smaller is the difference between the refractive index of the coating and the surrounding fluid. Consequently, the more fluid is absorbed within the coating the smaller are the changes of the measured reflectivity values with increasing (simulated) laser intensity.

A quantitative determination of the water content may be based on the fact that the measured reflectivity value is also proportional to the square of the difference between the refractive index of the surrounding fluid and the refractive index of the ophthalmic lens at the fluid-containing surface of the ophthalmic lens, which e.g. may be a coated surface of a coated ophthalmic lens. In this quantitative determination the refractive index of the fluid-containing coating is defined as the sum of the concentration of fluid in the coating multiplied with the refractive index of the fluid, and the concentration of the coating matrix in the coating multiplied with the refractive index of the coating matrix.

Depending on the compatibility of the coating material and the substrate material of the coated ophthalmic lens, the coating will have more or less endurance with regard to mechanical stress. Even the long term stability or the ageing of the coating of a coated ophthalmic lens may be qualitatively evaluated against a reference coated ophthalmic lens by measuring the reflectivity value of at least one segment of the front surface or the back surface of the coated ophthalmic lens periodically over a longer period of time, and by comparing the measured reflectivity value with the corresponding reference reflectivity value of a reference coated ophthalmic lens. It should be noted though, that such long term observations are not restricted to coated ophthalmic lenses. They may be carried out also to gather information e.g. about the stability and the aging of non-coated ophthalmic lenses or about the long term effectivity of plasma treatments of ophthalmic lenses.

Measuring the reflectivity values of coated surfaces of coated ophthalmic lenses and comparing the measured reflectivity values with respective reference reflectivity values of a coated reference ophthalmic lens may be used to identify optimum parameters for carrying out the coating of the ophthalmic lens. Such parameters include but are not limited to coating time, temperature of a coating bath, concentration of the coating bath, etc. The reflectivity measurements may be carried out rather fast with a high local resolution and non-destructive.

The measurement of a reflectivity value of a front surface or of a back surface of an ophthalmic lens, which may be provided with a coating, may also be used for an evaluation of an absorption rate of lens treatment fluid by the ophthalmic lens. For that purpose first the solubility of the lens treatment fluid in water, lacrimal fluid, tear-like fluid, and mixtures thereof is determined. In a further process step the absorption of water, lacrimal fluid, tear-like fluid, and mixtures thereof in the ophthalmic lens, which may be provided with a coating, may be determined qualitatively and even quantitatively from measurements of reflectivity values of the (coated) front surface or the (coated) back surface of a (coated) ophthalmic lens and from a comparison with reference reflectivity values of a reference (coated) ophthalmic lens having known material properties. From the differences between the measured reflectivity values and the corresponding reference reflectivity values the absorption rate of the fluid may be concluded.

While the method according to the invention may be carried out generally for any kind of ophthalmic lens, it is particularly useful and practical in a qualitative or quantitative characterization of contact lenses such as soft contact lenses.

### BRIEF DESCRIPTION OF THE DRAWINGS

Further details and advantages of the invention will become apparent from the following description with reference to the schematic drawings, in which:
- Fig. 1: shows a setup for carrying out the method according to the invention; and
- Fig. 2: shows for three different kinds of coated ophthalmic lenses the results of reflectivity measurements performed according to one aspect of the method of the invention at different simulated intensities of an irradiating laser.

### DETAILED DESCRIPTION OF EMBODIMENTS

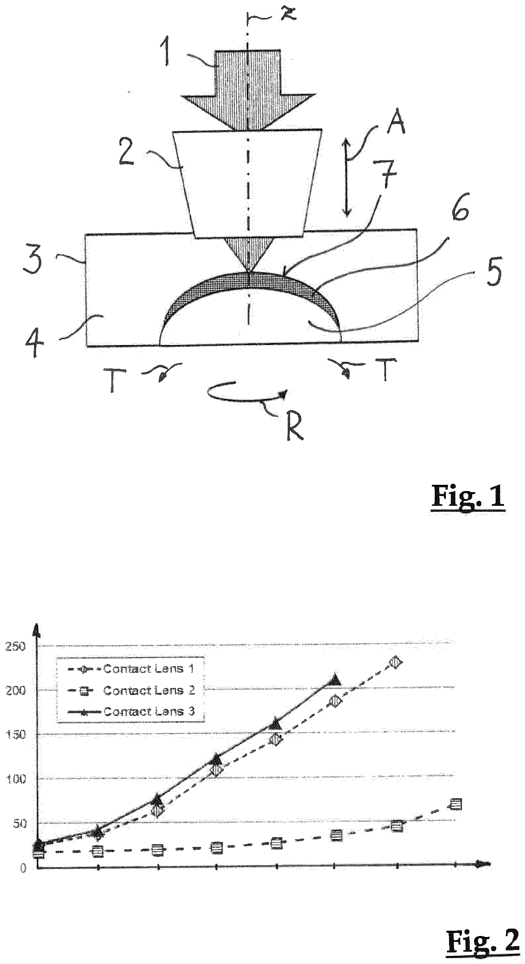

The setup which is shown schematically in Fig. 1 comprises an irradiating laser (not shown) which provides a scanning laser beam which is indicated by the arrow 1, a water tip objective 2, a container 3 containing water 4, and a lens support 5 which is arranged within the container 3 and is immersed in the water 4. It should be noted that instead of water also lacrimal fluid or a tear-like fluid or mixtures of the mentioned fluids may be contained within the container 3. The irradiating laser may be that of a confocal laser scanning microscope, the principle of which is well-known from the prior art and therefore is not discussed here in detail.

The laser beam 1 is passed through the water tip objective 2, a front lens of which is immersed in the water 4 within the container 3. The water tip objective 2 focusses the laser beam into a small focal volume which has an extension in direction of an optical axis z in the range of 8 µm to 13 µm, preferably about 10 µm. A planar segment of the focal volume, which extends about perpendicular to the optical axis, has a lateral extension of about 12 µm to 17 µm, preferably about 15 µm. The position of the water tip objective 2 may be changed relative to the position of the lens support 5 along the optical axis z. By changing the position of the water tip objective 2, the position of the focal volume within the water 4 in the container 3 may be changed in order to determine a transition from the water 4 to a front surface 7 of an ophthalmic lens 6 which rests on the lens support 5. The ophthalmic lens 6 may be, for example, a soft contact lens having coated front and back surfaces. Laser light 1 which is reflected within the container 3 passes through the water tip objective 2 and is directed via a beam splitter (not shown) towards a light detector (not shown).

The small focal volume is advanced through the water 4 within the container 3 along the direction of the optical axis z until maximum reflectivity is measured. The linear advancement of the water tip objective 2 is indicated by the double arrow A. The measured maximum reflectivity corresponds to a maximum difference in the refractive indices as the focal volume of the laser beam 1 advances from the water 4 to the coated front surface 7 of the coated ophthalmic lens 6, which is arranged on the lens support 5. Thus, the location of the transition from the water 4 to the coated front surface 7 of the coated ophthalmic lens 6 is determined. If the coating of the coated back surface 8 location of the transition from the coated back surface 8 is to be determined, the coated ophthalmic lens 6 can be inverted and placed on the lens support 5 such that the inverted coated back surface 8 of the coated ophthalmic lens 6 faces the water tip objective 2 or, alternatively, the coated ophthalmic lens 6 is not inverted and is held in the water 4 such that there is a transition between the water 4 and the coated back surface 8 of the coated ophthalmic lens 6 and the focal volume is advanced to a position in which it includes the transition between the water 4 and the coated back surface 8 of the coated ophthalmic lens 6.

The refractive index of the coating depends on the amount of water absorbed in the coating. The refractive index of the coating of the coated front surface 7 or the coated back surface 8 of the coated ophthalmic lens 6 surface corresponds to the sum of the concentration of fluid in the coating multiplied with the refractive index of the fluid and the concentration of the coating matrix in the coating multiplied with the refractive index of the coating matrix. Depending on the difference between the refractive index of the surrounding water 4 and the refractive index of the coating of the coated front surface 7 or the coated back surface 8, a stronger or weaker value of the reflectivity will be measured. The more water is absorbed in the coating, the more the refractive index of the surrounding water 4 will resemble the refractive index of the coating of the coated front surface 7 or the coated back surface 8 and, consequently, the smaller the measured value of the reflectivity will be.

In order to be able to measure the reflectivity of different segments of the coated front surface 7 (or the coated back surface 8, respectively), the lens support 5 may be rotated about its axis, which in a starting position coincides with the optical axis z, and which may be tilted from a starting position to an angle of up to 60°. Rotation is indicated by the arrow R, while tilting is indicated by the arrows T. The starting position may be defined as the position of the lens support 5 in which the optical axis z coincides with a central normal on the lens surface 7. The central normal runs through the center of the coated ophthalmic lens and normal to the plane which is tangential to the coated ophthalmic lens 6 at the lens center. For a quick test a measurement in a central segment of the coated lens surface 7 including the center of the coated ophthalmic lens 6, may be sufficient. For example, such a one-segment inspection may be sufficient for a determination of the efficacy of a coating process, by verifying that a coating is present. In order to obtain a better characterization of the coated ophthalmic lens 6 the reflectivity of a central segment and of a number of segments in a peripheral region of the coated front surface or back surface of the coated ophthalmic lens may be measured. The peripheral region of the coated front surface 7 or the coated back surface 8 of the coated ophthalmic lens 6 may be selected such that it has an angular distance from the central segment of up to 65°, preferably of up to 40°.

Measurements in the selected peripheral regions in particular cover the optical zone of the coated ophthalmic lens 6. By measuring values of the reflectivity of the coated front surface 7 (or the coated back surface 8, respectively) also in peripheral regions of the coated ophthalmic lens, it may be ensured that the coating is homogeneous over the entire ophthalmic lens and that the coating polymer possesses a targeted compactness. Also, with an increasing number of inspected segments of the coated front surface 7 (or the coated back surface 8, respectively) a more detailed characterization of the coated ophthalmic lens 6 may be achieved. Such multi-segment measurements may be useful e.g. for a determination of the resistance to mechanical stress of the coating, or for longtime endurance and ageing evaluations of coated ophthalmic lenses. If deemed necessary the coated ophthalmic lens 6 may also be scanned over the entire coated front surface 7 or the entire coated back surface 8 of the coated ophthalmic lens 6.

The measured reflectivity values may be stored and visualized on an output device, such as for example an electronic monitor. The reflectivity values may for example be combined in a two-dimensional grey scale representation of the coated front surface 7 (or the coated back surface 8, respectively). Depending on the resolution of the system the grey scale e.g. may be represented by values between 0 and 255. The grey scale values are directly proportional to the measured reflectivity values. The measured reflectivity values may be compared with the reference reflectivity values of the coated front surface or the coated back surface of a coated reference ophthalmic lens with known material properties visually or electronically. Thus, a qualitative characterization of an inspected coated ophthalmic lens 6 may be obtained very easily.

Fig. 2 shows diagrammatically the results of reflectivity measurements of three different coated ophthalmic lenses, which may be performed with a confocal laser scanning microscope at varying sensitivities of the sensor. Varying the sensitivity of the sensor corresponds to a varying of the amplification of a photo-multiplier tube and simulates varying intensities of the irradiating laser of the confocal laser scanning microscope. On the vertical axis (ordinate) the grey scale values are represented in values between 0 and 255. On the horizontal axis (abscissa) the simulated varying intensity of the irradiating laser is represented, with the laser intensities increasing from left to right. Such reflectivity measurements at different sensitivities of the sensor, corresponding to different laser intensities, may be performed in order to determine an optimal sensitivity of the sensor and intensity of the irradiating laser, respectively, for carrying out the measurements. By measuring the reflectivity value of one segment at varying sensitivities of the sensor or intensities of the irradiating laser, respectively, influences of stray light and other perturbations may be eliminated. It can be observed that the measured reflectivity value over a wide range of intensities of the irradiating laser is linearly proportional to the (simulated) laser intensity. Thus, for a characterization of a novel coating material an intensity of the irradiating laser may be selected at which this linear correlation is given. It should be noted, that the more fluid is absorbed within the coating, which may be a polymeric coating, the smaller is the difference between the refractive index of the coating and the surrounding fluid. Consequently, the more fluid is absorbed within the coating the smaller are the changes of the measured reflectivity with increasing (simulated) laser intensity and the smaller is the slope of the graph.

From the measured reflectivity values a water content of the ophthalmic lens 6 at the coated lens surface 7 may be quantified. A quantitative determination of the water content may be based on the fact that the measured reflectivity is also proportional to the square of the difference between the refractive index of the surrounding fluid and the refractive index of the fluid-containing coating. In this quantitative determination the refractive index of the fluid-containing coating is defined as the sum of the concentration of fluid in the polymeric coating multiplied with the refractive index of the fluid and the concentration of the coating matrix in the polymeric coating multiplied with the refractive index of the coating matrix.

As has been mentioned before, the method according to the invention may be used to determine e.g. an optimum coating material and optimum coating parameters for a given substrate material of an ophthalmic lens. Such optimum coating parameters include but are not limited to coating time, temperature of a coating bath, concentration of a coating bath, etc. In yet a further application, the method according to the invention may even be used qualitatively and quantitatively determine absorption rates of a fluid within the coating.

Although the invention has been described with reference to a specific test setup using a confocal laser scanning microscope, it is evident to the person skilled in the art that this embodiment has been described only by way of example , and that various changes and modifications are conceivable without departing from the teaching underlying the invention. While the invention has been described with particular focus on the testing of coated ophthalmic lenses, it must be noted that the testing method may as well be carried out with non-coated ophthalmic lenses in order to determine characteristic properties of lens materials or optimum parameters e.g. of a plasma treatment of the ophthalmic lenses. Therefore, the invention is not intended to be limited by the embodiment described but rather is defined by the appended claims.

## Claims

1. Method for quantifying the water content of a surface of a contact lens having a front surface (7) and a back surface (8), the method comprising the steps of:
- immersing the contact lens (6) in water, and with the aid of an optical inspection system having an optical axis (z) extending from the optical inspection system to the surface of the immersed lens and comprising a water tip objective (2) a front lens of which is immersed in the water:
- focusing a laser beam of the optical inspection system into a focal volume in the water extending in the direction of the optical axis (z), and measuring a reflectivity value of the respective focal volume,
- advancing the focal volume through the water along the direction of the optical axis (z) by changing the position of the water tip objective (2) until a maximum reflectivity value of the reflectivity values of the focal volumes is measured,
- determining a transition from the water to the front surface (7) or to the back surface (8) of the contact lens (6) to determine the location of the front surface (7) or back surface (8) of the contact lens (6) at that focal volume where the maximum reflectivity value is measured,
- measuring at that location a reflectivity value of at least one segment of the front surface (7) or the back surface (8) of the contact lens (6),
- storing each measured reflectivity value,
- comparing each stored measured reflectivity value with a corresponding reference reflectivity value of a front surface or a back surface of a reference contact lens having known material properties including the refractive index of the material and having a known water concentration, and
- from the respective stored measured reflectivity value and the refractive index of the material of the contact lens, from the corresponding reference reflectivity value and the refractive index of the material and the known water concentration of the reference contact lens, as well as from the refractive index of water, quantifying the water content of the front surface (7) or the back surface (8) of the contact lens.

2. Method according to claim 1, wherein a confocal laser scanning microscope is used for determining the transition from the water to the front surface (7) or to the back surface (8) of the contact lens (6) as well as for measuring the reflectivity value of the at least one segment of the front surface (7) or the back surface (8) of the contact lens (6).

3. Method according to any one of claims 1 or 2, wherein at least the reflectivity value of a central segment of the front surface (7) or the back surface (8) of the contact lens (6) is measured.

4. Method according to claim 3, wherein the reflectivity value of the central segment and reflectivity values of a number of peripheral segments of a peripheral region of the front surface (7) or the back surface (8) of the contact lens (6) are measured, wherein the peripheral region of the front surface (7) or the back surface (8) extends from the central segment an angular distance of up to 65°, preferably up to 40°, as measured from a central normal on the contact lens (6).

5. Method according to any one of the preceding claims, wherein the reflectivity values are measured in a plurality of segments arranged over the entire front surface (7) or back surface (8) of the contact lens (6).

6. Method according to any one of the preceding claims, further comprising the step of arranging the contact lens (6) on a lens support (5), wherein the reflectivity values are measured in a plurality of segments of the front surface (7) or of the back surface (8) of the contact lens (6) by tilting (T) the lens support (5) together with the contact lens (6) arranged thereon by an angle of up to 65° relative to a starting position of the optical inspection system, in which the optical axis (z) of the optical inspection system and a central normal on the contact lens (6) coincide, and by rotating (R) the lens support (5) together with the contact lens (6) arranged thereon about a rotational axis coinciding with the central normal on the contact lens.

7. Method according to any one of the preceding claims, wherein for the measurement of the reflectivity value of the at least one segment of the back surface (8) of the contact lens (6) the contact lens (6) is inverted.

8. Method according to any one of the preceding claims, wherein the step of comparing each stored measured reflectivity value with a corresponding reference reflectivity value comprises:
- displaying the respective stored measured reflectivity value on an output device as a first grey scale value,
- displaying the corresponding reference reflectivity value on the output device as a second grey scale value, and
- visually comparing on an electronic monitor, or electronically comparing the first and second grey scale values.

9. Method according to claim 2 and any one of claims 3 to 8, wherein the reflectivity value of the at least one segment of the front surface (7) or the back surface (8) of the contact lens (6) is measured at different sensitivities of a sensor of the confocal laser scanning microscope, and wherein the measured reflectivity values at the different sensor sensitivities of the confocal laser scanning microscope are stored and evaluated to determine an optimum sensitivity of the sensor of the confocal laser microscope for carrying out the reflectivity value measurements.

10. Method according to any one of the preceding claims, wherein measurement of the reflectivity value is carried out on a coated front surface (7) or on a coated back surface (8) of a contact lens, in particular a soft contact lens.

## Patentansprüche

1. Verfahren zum Quantifizieren eines Wassergehalts auf einer Oberfläche einer Kontaktlinse, die eine Vorderseite (7) und eine Rückseite (8) aufweist, wobei das Verfahren die folgenden Schritte umfasst:
- Eintauchen der Kontaktlinse (6) in Wasser; und
mit der Hilfe eines optischen Prüfsystems, das eine optische Achse (z) aufweist, die sich von dem optischen Prüfsystem zur Oberfläche der eingetauchten Linse erstreckt, und das ein Wasserberührungsobjektiv (2) umfasst, von dem eine vordere Linse in das Wasser eingetaucht ist:
- Fokussieren eines Laserstrahls des optischen Prüfsystems in ein Fokalvolumen in dem Wasser, das sich in der Richtung der optischen Achse (z) erstreckt, und Messen eines Reflektivitätswerts des entsprechenden Fokalvolumens,
- Vorschieben des Fokalvolumens durch das Wasser entlang der Richtung der optischen Achse (z), indem die Position des Wasserberührungsobjektivs (2) verändert wird, bis ein maximaler Reflektivitätswert der Reflektivitätswerte des Fokalvolumens gemessen wird,
- Ermitteln eines Übergangs von dem Wasser zur Vorderseite (7) oder zur Rückseite (8) der Kontaktlinse (6), um den Ort der Vorderseite (7) oder der Rückseite (8) der Kontaktlinse (6) in dem Fokalvolumen zu ermitteln, in dem der maximale Reflektivitätswert gemessen wird,
- Messen an diesem Ort eines Reflektivitätswerts von mindestens einem Segment der Vorderseite (7) oder der Rückseite (8) der Kontaktlinse (6),
- Speichern jedes gemessenen Reflektivitätswerts,
- Vergleichen jedes gespeicherten gemessenen Reflektivitätswerts mit einem entsprechenden Referenzreflektivitätswert einer Vorderseite oder einer Rückseite einer Referenzkontaktlinse, die bekannte Materialeigenschaften einschließlich des Brechungsindex des Materials aufweist und die eine bekannte Wasserkonzentration aufweist, und
- aus dem entsprechenden gespeicherten gemessenen Reflektivitätswert und dem Brechungsindex des Materials der Kontaktlinse, aus dem entsprechenden Referenzreflektivitätswert und dem Brechungsindex des Materials und der bekannten Wasserkonzentration der Referenzkontaktlinse sowie aus dem Brechungsindex von Wasser, Quantifizieren des Wassergehalts der Vorderseite (7) oder der Rückseite (8) der Kontaktlinse.

2. Verfahren nach Anspruch 1, wobei ein konfokales Laserabtastmikroskop verwendet wird zum Ermitteln des Übergangs von dem Wasser zur Vorderseite (7) oder zur Rückseite (8) der Kontaktlinse (6) sowie zum Messen des Reflektivitätswerts des mindestens einen Segments der Vorderseite (7) oder der Rückseite (8) der Kontaktlinse (6) .

3. Verfahren nach einem der Ansprüche 1 oder 2, wobei mindestens der Reflektivitätswert eines zentralen Segments der Vorderseite (7) oder der Rückseite (8) der Kontaktlinse (6) gemessen wird.

4. Verfahren nach Anspruch 3, wobei der Reflektivitätswert des zentralen Segments und die Reflektivitätswerte einer Anzahl von peripheren Segmenten eines peripheren Gebiets der Vorderseite (7) oder der Rückseite (8) der Kontaktlinse (6) gemessen werden, wobei sich das periphere Gebiet der Vorderseite (7) oder der Rückseite (8) in einem Winkelabstand von bis zu 65°, vorzugsweise bis zu 40° von dem zentralen Segment aus erstreckt, wenn der Winkelabstand von einer zentralen Normale auf die Kontaktlinse (6) gemessen wird.

5. Verfahren nach einem der vorhergehenden Ansprüche, wobei die Reflektivitätswerte in einer Vielzahl von Segmenten gemessen werden, die über der gesamten Vorderseite (7) oder der gesamten Rückseite (8) der Kontaktlinse (6) angeordnet sind.

6. Verfahren nach einem der vorhergehenden Ansprüche, das außerdem den Schritt eines Anordnens der Kontaktlinse (6) auf einem Linsenträger (5) umfasst, wobei die Reflektivitätswerte in einer Vielzahl von Segmenten der Vorderseite (7) oder der Rückseite (8) der Kontaktlinse (6) gemessen werden, indem der Linsenträger (5) zusammen mit der darauf angeordneten Kontaktlinse (6) um einen Winkel von bis zu 65° relativ zu einer Startposition des optischen Prüfsystems gekippt (T) wird, wobei die optische Achse (z) des optischen Prüfsystems und eine zentrale Normale auf die Kontaktlinse (6) übereinstimmen, und indem der Linsenträger (5) zusammen mit der darauf angeordneten Kontaktlinse (6) um eine Drehachse gedreht (R) wird, die mit der zentralen Normale auf die Kontaktlinse übereinstimmt.

7. Verfahren nach einem der vorhergehenden Ansprüche, wobei für die Messung des Reflektivitätswerts des mindestens einen Segments der Rückseite (8) der Kontaktlinse (6) die Kontaktlinse (6) umgedreht wird.

8. Verfahren nach einem der vorhergehenden Ansprüche, wobei der Schritt des Vergleichens jedes gespeicherten gemessenen Reflektivitätswerts mit einem entsprechenden Referenzreflektivitätswert umfasst:
- Anzeigen des jeweiligen gespeicherten gemessenen Reflektivitätswerts auf einer Ausgabevorrichtung als ein erster Grauskalenwert,
- Anzeigen des entsprechenden Referenzreflektivitätswerts auf der Ausgabevorrichtung als ein zweiter Grauskalenwert, und
- optisches Vergleichen auf einem elektronischen Monitor oder elektronisches Vergleichen des ersten und des zweiten Grauskalenwerts.

9. Verfahren nach Anspruch 2 und einem der Ansprüche 3 bis 8, wobei der Reflektivitätswert des mindestens einen Segments der Vorderseite (7) oder der Rückseite (8) der Kontaktlinse (6) mit unterschiedlichen Empfindlichkeiten eines Sensors des konfokalen Laserabtastmikroskops gemessen wird, und wobei die bei unterschiedlichen Sensorempfindlichkeiten des konfokalen Laserabtastmikroskops gemessenen Reflektivitätswerte gespeichert und bewertet werden, um eine optimale Empfindlichkeit des Sensors des konfokalen Laserabtastmikroskops zum Ausführen der Reflektivitätswertmessungen zu ermitteln.

10. Verfahren nach einem der vorhergehenden Ansprüche, wobei die Messung des Reflektivitätswerts auf einer beschichteten Vorderseite (7) oder auf einer beschichteten Rückseite (8) der Kontaktlinse und insbesondere einer weichen Kontaktlinse ausgeführt wird.

## Revendications

1. Procédé permettant de quantifier la teneur en eau d'une surface d'une lentille de contact possédant une surface avant (7) et une surface arrière (8), le procédé comprenant les étapes de :
- immersion de la lentille de contact (6) dans de l'eau, et, à l'aide d'un système d'inspection optique possédant un axe optique (z), extension depuis le système d'inspection optique vers la surface de la lentille immergée et comprenant un objectif à pointe immergée dans l'eau (2) dont une lentille avant est immergée dans de l'eau :
- focalisation d'un faisceau laser du système d'inspection optique dans un volume focal dans l'eau s'étendant dans la direction de l'axe optique (z), et mesure d'une valeur de réflectivité du volume focal respectif,
- progression du volume focal à travers l'eau le long de la direction de l'axe optique (z) en changeant la position de l'objectif à pointe immergée dans l'eau (2) jusqu'à ce qu'une valeur de réflectivité maximum des valeurs de réflectivité des volumes focaux soit mesurée,
- détermination d'une transition depuis l'eau vers la surface avant (7) ou vers la surface arrière (8) de la lentille de contact (6) pour déterminer l'emplacement de la surface avant (7) ou de la surface arrière (8) de la lentille de contact (6) à ce volume focal où la valeur de réflectivité maximum est mesurée,
- mesure, à cet emplacement, d'une valeur de réflectivité d'au moins un segment de la surface avant (7) ou de la surface arrière (8) de la lentille de contact (6),
- mémorisation de chaque valeur de réflectivité mesurée,
- comparaison de chaque valeur de réflectivité mesurée mémorisée avec une valeur de réflectivité de référence correspondante d'une surface avant ou d'une surface arrière d'une lentille de contact de référence possédant des propriétés matérielles connues comprenant l'indice de réfraction du matériau et ayant une concentration en eau connue, et
- à partir de la valeur de réflectivité mesurée mémorisée respective et de l'indice de réfraction du matériau de la lentille de contact, à partir de la valeur de réflectivité de référence correspondante et de l'indice de réfraction du matériau et de la concentration en eau connue de la lentille de contact de référence, ainsi qu'à partir de l'indice de réfraction de l'eau, quantification de la teneur en eau de la surface avant (7) ou de la surface arrière (8) de la lentille de contact.

2. Procédé selon la revendication 1, dans lequel un microscope à balayage laser confocal est utilisé pour la détermination d'une transition depuis l'eau vers la surface avant (7) ou vers la surface arrière (8) de la lentille de contact (6) ainsi que pour la mesure de la valeur de réflectivité de l'au moins un segment de la surface avant (7) ou de la surface arrière (8) de la lentille de contact (6).

3. Procédé selon l'une quelconque des revendications 1 ou 2, dans lequel au moins la valeur de réflectivité d'un segment central de la surface avant (7) ou de la surface arrière (8) de la lentille de contact (6) est mesurée.

4. Procédé selon la revendication 3, dans lequel la valeur de réflectivité du segment central et des valeurs de réflectivité d'un certain nombre de segments périphériques d'une région périphérique de la surface avant (7) ou de la surface arrière (8) de la lentille de contact (6) sont mesurées, dans lequel la région périphérique de la surface avant (7) ou de la surface arrière (8) s'étend depuis le segment central sur une distance angulaire allant jusqu'à 65°, de préférence jusqu'à 40°, mesurée depuis une normale centrale sur la lentille de contact (6).

5. Procédé selon l'une quelconque des revendications précédentes, dans lequel les valeurs de réflectivité sont mesurées dans une pluralité de segments agencés sur toute la surface avant (7) ou toute la surface arrière (8) de la lentille de contact (6).

6. Procédé selon l'une quelconque des revendications précédentes, comportant en outre l'étape comprenant l'agencement de la lentille de contact (6) sur un support (5) de lentille, dans lequel les valeurs de réflectivité sont mesurées dans une pluralité de segments de la surface avant (7) ou de la surface arrière (8) de la lentille de contact (6) en inclinant (T) le support (5) de lentille conjointement avec la lentille de contact (6) agencée sur celui-ci selon un angle allant jusqu'à 65° par rapport à une position de démarrage du système d'inspection optique, dans lequel l'axe optique (z) du système d'inspection optique et une normale centrale sur la lentille de contact (6) coïncident, et en faisant tourner (R) le support (5) de lentille conjointement avec la lentille de contact (6) agencée sur celui-ci sur un axe de rotation coïncidant avec la normale centrale sur la lentille de contact.

7. Procédé selon l'une quelconque des revendications précédentes, dans lequel, pour la mesure de la valeur de réflectivité de l'au moins un segment de la surface arrière (8) de la lentille de contact (6), la lentille de contact (6) est inversée.

8. Procédé selon l'une quelconque des revendications précédentes, dans lequel l'étape de comparaison de chaque valeur de réflectivité mesurée mémorisée avec une valeur de réflectivité de référence correspondante comprend :
- l'affichage de la valeur de réflectivité mesurée mémorisée respective sur un dispositif de sortie en tant que première valeur d'échelle de gris,
- l'affichage de la valeur de réflectivité de référence correspondante sur le dispositif de sortie en tant que seconde valeur d'échelle de gris, et
- la comparaison visuelle sur un moniteur électronique, ou la comparaison électronique des première et seconde valeurs d'échelle de gris.

9. Procédé selon la revendication 2 et selon l'une quelconque des revendications 3 à 8, dans lequel la valeur de réflectivité de l'au moins un segment de la surface avant (7) ou de la surface arrière (8) de la lentille de contact (6) est mesurée à différentes sensibilités d'un capteur du microscope à balayage laser confocal, et dans lequel les valeurs de réflectivité mesurées aux différentes sensibilités de capteur du microscope à balayage laser confocal sont mémorisées et évaluées pour déterminer une sensibilité optimale du capteur du microscope laser confocal pour effectuer les mesures de valeurs de réflectivité.

10. Procédé selon l'une quelconque des revendications précédentes, dans lequel une mesure de la valeur de réflectivité est effectuée sur une surface avant revêtue (7) ou une surface arrière revêtue (8) d'une lentille de contact, en particulier d'une lentille de contact souple.
